# EUROPÄISCHE PATENTSCHRIFT

(11) **EP 1 595 317 B1**
(45) Veröffentlichungstag und Bekanntmachung des Hinweises auf die Patenterteilung: **23.06.2010**
(21) Anmeldenummer: 04710824.6
(22) Anmeldetag: 13.02.2004
(51) Int. Cl.: H02B 1/21, H01H 71/08

(54) **SCHUTZSCHALTEREINRICHTUNG**
CIRCUIT BREAKER DEVICE
SYSTEME DE COMMUTATEUR DE PROTECTION

(30) Priorität: 17.02.2003 DE 10306548
(43) Veröffentlichungstag der Anmeldung: 16.11.2005
(73) Patentinhaber: Wöhner GmbH & Co. KG Elektrotechnische Systeme, 96472 Rödental (DE)
(72) Erfinder: BÜTTNER, Alex, 96472 Rödental (DE)
(74) Vertreter: Skuhra, Udo
(86) Internationale Anmeldenummer: PCT/EP2004/001375
(87) Internationale Veröffentlichungsnummer: WO 2004/073127

(56) Entgegenhaltungen:
- EP-A- 0 762 581
- EP-A- 1 065 683
- EP-A- 1 251 538
- WO-A-02/50855
- FR-A- 2 590 416
- US-A- 6 036 542

## Beschreibung

Die Erfindung betrifft eine Schutzschaltereinrichtung, entsprechend dem Oberbegriff des Patentanspruchs 1.

Aus der FR-A-2 590 416 ist eine Schutzschaltereinrichtung entsprechend dem Oberbegriff des Patentanspruchs 1 bekannt, die als elektrische Verteilerinstallation im Niederspannungsbereich eingesetzt wird und ein mit Stromsammelschienen in elektrischen Kontakt verbringbaren ersten Schalterteil und einem auf das erste Schalterteil aufsetzbares zweites Schalterteil mit einer Ausrüstung in Form von Beispielsweise Schutzschaltern beinhaltet. Weiterhin ist ein Anschlussmodul für mindestens eine Abgangsleitung vorgesehen. Das erste Schalterteil weist mit den Stromsammelschienen in elektrischen Kontakt befindliche Kontaktelemente auf, die über jeweils einen Zugangsschlitz in eine Fläche des ersten Schalterteils berührungssicher durch Steckkontakte des zweiten Schalterteils kontaktierbar sind.

Schutzschaltereinrichtungen werden als Sicherungsschalter, Motorschutzschalter oder dergleichen verwendet und werden im Allgemeinen mit einem so genannten Adapterteil verwendet, welches als vollständig separates Element auf Stromsammelschienen aufgesetzt wird. Das Adapterteil dient dabei zum einen zum Aufklemmen auf die Stromsammelschienen und zum anderen als Trägermodul für die unterschiedlichen Schutzschaltereinrichtungen. Die elektrische Verbindung zwischen den Stromsammelschienen einerseits und den Schutzschaltereinrichtungen andererseits erfolgt dadurch, dass die Kontaktteile über Verbindungsleitungen mit den betreffenden Schutzschaltereinrichtungen elektrisch verbunden wurden. Derartige Adapter- bzw. Stromsammelschienenadapter sind beispielsweise aus der EP 0 762 581 bekannt.

Nachteilig an den bekannten Systemen ist, dass die Adapter als zusätzliche Komponenten auf den Stromsammelschienen befestigt und mit Verbindungsleitungen oder Verbindungskontakten versehen werden müssen und die Schutzschaltereinrichtungen als separate Elemente auf den Adaptern montiert und elektrisch mit den Verbindungsleitungen oder Verbindungskontakten in Kontakt gebracht werden müssen. Im Falle eines Austausches oder einer Demontage einer Schutzschaltereinrichtung ist es hierbei notwendig, die Abgangsleitungen von der betreffenden Schutzschaltereinrichtung zu entfernen und anschließend wieder zu verbinden. Zusätzlich ist die Schutzschaltereinrichtung vor der Demontage gegenüber dem Adapterteil zu lösen und nach dem Austausch ist die neue Schutzschaltereinrichtung zu befestigen. Gegebenenfalls müssen sogar die Stromschienen stromlos geschaltet werden.

Der Erfindung liegt die Aufgabe zugrunde, eine Schutzschaltereinrichtung zu schaffen, die auf einfache Weise auf Stromsammelschienen befestigt und ohne Entfernung von Abgangsleitungen austauschbar ist.

Diese Aufgabe wird erfindungsgemäß durch die im Patentanspruch 1 angegebenen Merkmale gelöst. Weitere Ausgestaltungen der Erfindung ergeben sich aus den Unteransprüchen.

Die Erfindung schafft eine Schutzschaltereinrichtung, die aus beispielsweise drei eine integrierte Einheit darstellenden Komponenten besteht und auf einfache und schnelle Weise auf Stromsammelschienen aufgesetzt und mit diesen verrastet werden kann. Bei einer bevorzugten Ausführungsform ist ein am Schalterunterteil schwenkbar angeordnetes Anschlussmodul vorgesehen, welches durch mechanische Mittel, beispielsweise einen Schraubenzieher, aus der Betriebsstellung entrastet werden kann, anschießend zurückgeschwenkt werden kann und als Folge seiner Schwenkbewegung einen mit dem Anschlussmodul mechanisch gekuppelten Arretier- oder Verrastungsmechanismus in eine Freigabestellung verbringt, so dass ein Auswechseln des Schutzschalters in Form eines Schalteroberteils ermöglicht wird. Nach dem Auswechseln des Schutzschalters bzw. Schalteroberteils lässt sich in umgekehrter Weise die Einheit wieder zusammensetzen und nach Verschwenken des Anschlussmoduls in zur Öffnungsbewegung entgegengesetzter Weise erfolgt die Verriegelung zwischen Schalteroberteil, Schalterunterteil und Anschlussmodul. Die Verrastung der Schutzschaltereinrichtung gegenüber den Stromsammelschienen erfolgt vorzugsweise auf herkömmliche Weise. Hierbei ist es nicht erforderlich, die Stromschienen stromlos zu schalten oder Abgangsleitungen abzuklemmen.

Die erfindungsgemäße Schutzschaltereinrichtung, vorzugsweise eine 3-polige Schutzschaltereinrichtung lässt sich vorteilhafterweise in Schmalbauweise konzipieren. Die Abgangsleitungen sind in dem Anschlussmodul berührungssicher befestigt, derart, dass das Anschlussmodul in Richtung auf das Schalteroberteil weisende Kontakte besitzt, die in das Schalteroberteil hineingreifen. Nach dem Öffnen des Anschlussmoduls durch seitliches Schwenken vom Schalteroberteil weg wird der Stromfluss zum an die Abgangsleitungen angeschlossenen Verbraucher unterbrochen und die zum Schalteroberteil weisenden Kontakte des Anschlussmoduls sind ebenfalls stromlos.

Sowohl das Schalteroberteil als auch das Schalterunterteil weisen separate Gehäuse auf. Das Schalterunterteil hat in der nach oben weisenden Fläche des Gehäuses Öffnungsschlitze oder Öffnungen zum Einschieben von Steckkontakten, die vom Schalteroberteil aus dem Gehäuse nach unten vorstehen. Dies bedeutet, dass nach dem Abziehen des Schalteroberteils das Schalterunterteil berührungssicher ist, da die Kontaktelemente durch das Gehäuse abgedeckt sind.

Bei einer bevorzugten Ausführungsform lässt sich die erfindungsgemäße Schutzschaltereinrichtung derart auswechseln, dass nach einem Entrasten des Anschlussmoduls mithilfe eines Schraubenziehers oder dergleichen gegenüber dem Schalteroberteil das Anschlussmodul vom Schalteroberteil wegverschwenkbar ist. Durch die Schwenkbewegung des Anschlussmoduls wird eine mechanische Arretiereinrichtung, die mit dem Anschlussmodul in mechanischer Kupplungsbeziehung steht, gegenüber dem Schalteroberteil entrastet, wodurch ein Abziehen des Schalteroberteils vom Schalterunterteil möglich ist.

Bei einer weiteren Ausführungsform ist das Schalteroberteil mit seitlichen Öffnungen versehen, durch welche mittels Kontaktzungen oder dergleichen ein elektrischer Kontakt zu innerhalb des Gehäuses befindlichen Kontaktgegenzungen möglich ist. Alle Schalteroberteile haben in gleicher Höhe und mit gleicher Breite entsprechende Kontaktöffnungen, wodurch es möglich ist, zwei oder mehrere derartiger Schalteroberteile elektrisch miteinander zu verbinden, so dass zum Beispiel eine Motor-SchutzSchalter-Schütz-Kombination durch den Einsatz zweier derartiger, parallel zueinander liegender Schutzschaltereinrichtungen möglich ist. Die seitliche Schutzschaltereinrichtungskontaktierung ermöglicht auch eine Kombination als Motorstarterkombination.

Im Folgenden wird eine bevorzugte Ausführungsform der erfindungsgemäßen Schutzschaltereinrichtung zur Erläuterung weiterer Merkmale und Vorteile beschreiben. Es zeigen:
- Fig. 1: eine Seitenansicht einer Schutzschaltereinrichtung, bei der das Schalterunterteil teilweise aufgeschnit- ten dargestellt ist,
- Fig. 2: eine perspektivische Ansicht der Schutzschalterein- richtung nach Fig. 1,
- Fig. 3: eine im Wesentlichen Fig. 1 entsprechende Darstellung mit den Stromsammelschienen, wobei das Anschlussmodul seitlich aufgeschnitten ist,
- Fig. 4: zwei Schutzschaltereinrichtungen zur Erläuterung ei- ner aus zwei derartigen Einheiten bestehenden Kombi- nation,
- Fig. 5: schematische Darstellungen unterschiedlicher Kombina- tionseinheiten unter Zugrundelegung der erfindungsge- mäßen Schutzschaltereinrichtung,
- Fig. 6: eine Perspektivansicht der Schutzschaltereinrichtung entsprechend Fig. 2,
- Fig. 7: eine schematische, teilweise aufgeschnittene Darstel- lung einer Schutzschaltereinrichtung,
- Fig. 8: eine Darstellung eines Schalteroberteils zur Veran- schaulichung der Lagerung der Kontakte entsprechend Fig. 1 bzw. 6, und
- Fig. 9: eine Detaildarstellung entsprechend Fig. 8.

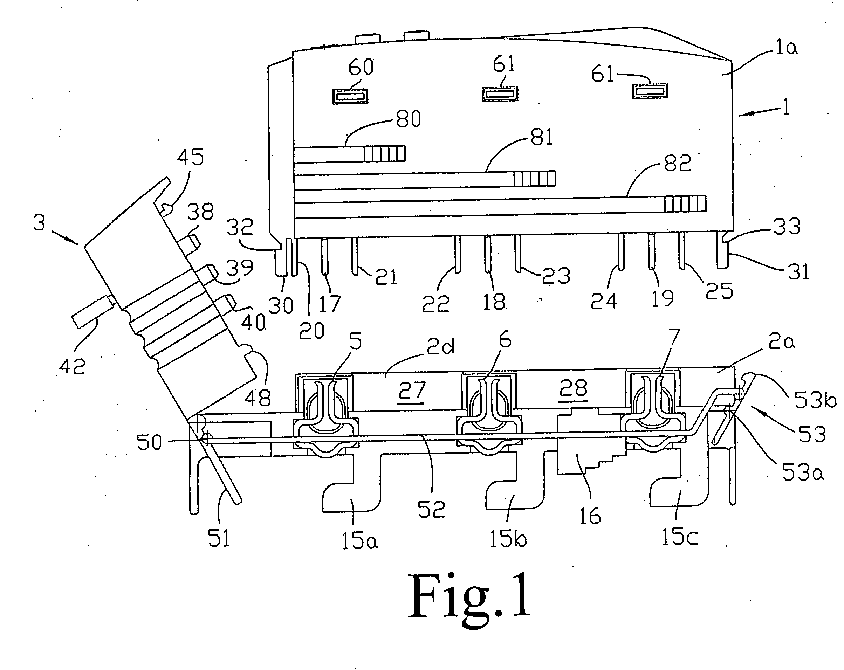

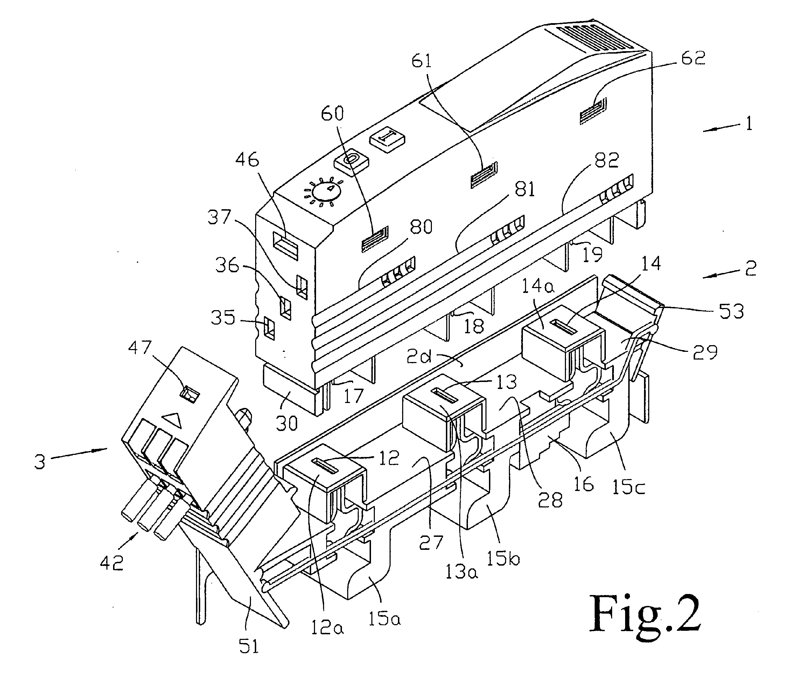

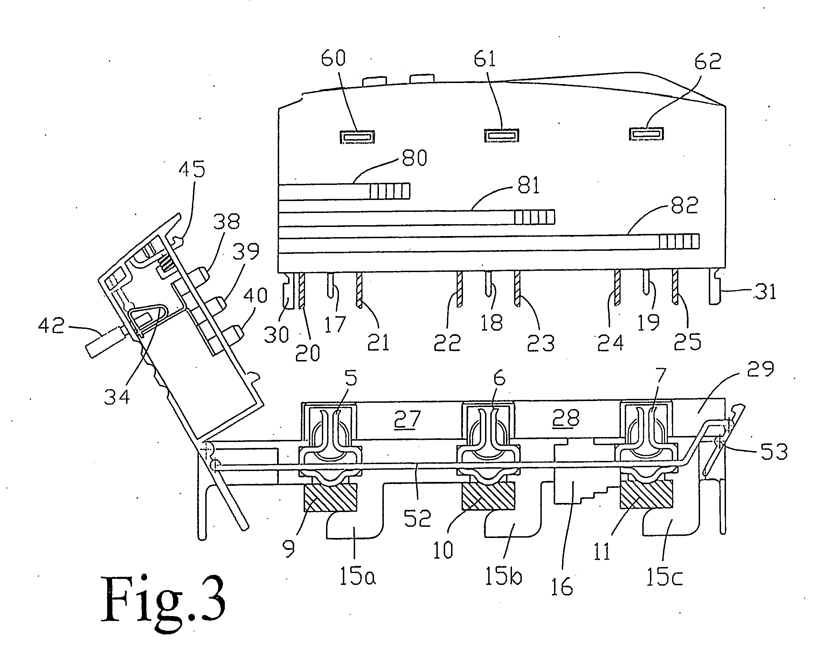

Fig. 1 zeigt eine Seitenansicht der erfindungsgemäßen Schutzschaltereinrichtung, die aus einem Schalteroberteil 1, einem Schalterunterteil 2 und einem Anschlussmodul 3 besteht. Fig. 2 zeigt eine schematische, perspektivische Darstellung der Schutzschaltereinrichtung nach Fig. 1, und Fig. 3 zeigt eine Fig. 1 entsprechende Darstellung zusammen mit den Stromsammelschienen, wobei in Fig. 1 das Schalterunterteil 2 seitlich aufgeschnitten ist, ebenso wie in Fig. 2 und 3.

Sowohl das Schalteroberteil 1 als auch das Schalterunterteil 2 weisen jeweils ein separates Gehäuse auf, das mit 1a bzw. 2a bezeichnet ist und das jeweils innerhalb der betreffenden Schalterteile befindlichen Kontakte, Sicherungseinsätze bzw. Schützen oder dergleichen berührungssicher einschließt.

Wie Fig. 1 bis 3 zeigen, befindet sich in dem Schalterunterteil 2 eine Anordnung aus Kontaktelementen 5, 6, 7, die über die untere Fläche des Gehäuses 2a überstehen, um mit Stromsammelschienen 9, 10, 11 in elektrischen Kontakt zu gelangen, sobald die Schützschaltereinrichtung auf die Sammelschienen 9, 10, 11 aufgesetzt ist. Jedes Schalterunterteil 2 besitzt zur Befestigung an den Sammelschienen 9, 10, 11 entsprechend ausgebildete Füße 15a, 15b, 15c, wie dies an sich bekannt ist, sowie zumindest eine Rastzunge bzw. Rasteinrichtung 16, die eine Befestigung der Schaltereinrichtung zumindest gegenüber der Stromschiene 11 sicherstellt. Auf diese Weise wird die Schaltereinrichtung fest und sicher gegenüber den Stromsammelschienen 9, 10, 11 gehaltert.

Das Schalterunterteil 2 ist gemäß Fig. 2 an seiner oberen Fläche bzw. Seite mit Schlitzen oder Öffnungen 12, 13, 14 versehen, die dazu dienen, dass entsprechende Kontaktzungen oder Steckkontakte 17, 18, 19 (Fig. 1) die vom Schalterunterteil 1 an dessen unterer Fläche nach unten vorstehen, über die Öffnungen 12, 13, 14 (Fig. 2) mit den Kontaktelementen 5, 6, 7 (siehe Fig. 1) in elektrischen Kontakt gebracht werden können.

Bei der in den Figuren dargestellten Ausführungsform sind seitlich der Steckkontakte 17, 18, 19 Führungen bzw. Füße 20 bis 25 vorgesehen, die aus einem isolierenden Material wie Kunststoff bestehen und an dem Gehäuse 1 als integrale Bestandteile angeordnet sein können. Diese Füße 20, 21 usw. bilden zugleich einen seitlichen Schutz der Steckkontakte 17 bis 19, haben aber im Wesentlichen Führungsfunktion, um ein gezieltes Aufsetzen des Schalteroberteils 1 auf dem Schalterunterteil 2 zu gewährleisten. Entsprechend weist das Schalterunterteil 2 Ausnehmungen oder Aussparungen 27, 28, 29 auf, die hinsichtlich ihrer Breite, das heißt quer zum Stromsammelschienenverlauf, auf den Abstand der Füße 20, 21 bzw. 22, 23 bzw. 24, 25 abgestellt und abgestimmt sind, um ein exaktes Aufsetzen des Schalteroberteils 1 auf dem Schalterunterteil 2 und damit ein exaktes Einführen der Steckkontakte 17, 18, 19 in die betreffenden Kontaktschlitze 12, 13, 14 sicher zu stellen.

Die Kontaktelemente 5, 6, 7 sind demgegenüber zur Gehäuseoberfläche mit den Öffnungen 12, 13, 14 so weit nach unten versetzt innerhalb des Schutzschalterunterteils 2 vorgesehen, dass eine Berührung der Kontaktelemente 5, 6, 7 nach dem Abziehen des Schalteroberteils 1 vom Schalterunterteil 2 sicher verhindert ist.

An dem Schalteroberteil 1 sind weiterhin Gegenrastelemente 30, 31 vorgesehen, beispielsweise in Form von Laschen mit nach außen weisenden Rastöffnungen 32, 33 zu dem noch später beschriebenen Zweck, wie dies in Fig. 1 ff. gezeigt ist.

Die Kontakte 17, 18, 19 sind mit entsprechenden Seiten eines Motorschützes, einer Sicherungseinheit und dergleichen verbunden, deren andere Seiten bzw. Pole elektrisch mit Kontaktbuchsen bzw. Kontakten in Verbindung stehen, die innerhalb von Kontaktöffnungen 35, 36, 37 liegen, wobei diese Kontakte bzw. Kontaktbuchsen in den Figuren nicht weiter gezeigt sind. Die Öffnungen 35, 36, 37 sind bei der dargestellten Ausführungsform nach Fig. 2 vorzugsweise seitlich versetzt bzw. schräg verlaufend vorgesehen, sie können aber auch in einer Reihe übereinander angeordnet sein, entsprechend auch die darin befindlichen Kontakte.

Den Kontaktöffnungen 35, 36, 37 sind Kontaktzungen 38, 39, 40 zugeordnet, die vom Anschlussmodul 3 seitlich in Richtung auf das Schalteroberteil 1 weisend vorstehen und entsprechend der Anordnung der Öffnungen 35, 36, 37 am Anschlussmodul ausgebildet bzw. angeordnet sind. Bei einer bevorzugten Ausführungsform weist jedes Anschlussmodul 3 je Abgangsleitung 42 einen Federzug 34 auf. Insoweit wird auf Fig. 3 verwiesen. Die Kontaktzungen 38, 39, 40 sind innerhalb des Anschlussmoduls 3 mit einer Federklemme, Federzug 34 oder einer anderen Einrichtung zur festen Aufnahme von Anschlusskabeln 42 verbunden, wobei in den Figuren nur ein einziges Anschlusskabel 42 dargestellt ist.

Es ist ersichtlich, dass bei stromführenden Sammelschienen 9, 10, 11 die Kontakte 5, 6, 7 zumindest teilweise unter Spannung stehen, jedoch berührungssicher vom Gehäuse 2a abgedeckt sind, auch wenn das Schalteroberteil 1 entsprechend Fig. 1 abgezogen ist. Die Kontaktzungen 38, 39, 40 des Anschlussmoduls 3 sind ebenfalls nicht stromführend, sobald das Anschlussmodul 3 die betriebslose und in den Figuren 1 bis 3 gezeigte Position einnimmt.

Im Betriebszustand sowie im Lieferzustand sitzt das Schalteroberteil 1 fest auf dem Schalterunterteil 2 auf, weiterhin ist das Anschlussmodul 3 entgegen der Darstellung nach Fig. 1 im Uhrzeigersinn verschwenkt und liegt seitlich sowohl am Schalteroberteil 1 als auch am Schalterunterteil 2 an, derart, dass die Kontaktzungen 38, 39, 40 praktisch horizontal und zum Schalteroberteil 1 fluchtend in dieses eingesetzt sind und mit den im Schalteroberteil 1 korrelierenden Kontaktelementen in elektrischer Verbindung stehen. Im Betriebszustand bilden somit Schalteroberteil 1, Schalterunterteil und Anschlussmodul 3 eine fest miteinander verbundene Einheit.

Das Anschlussmodul 3 ist weiterhin mit einer lösbaren Rast- oder Arretiereinrichtung 45 versehen, beispielsweise in Form eines durch einen Schraubenzieher oder dergleichen verstellbaren Hakens 45, der in eine zugehörige Rastöffnung 46 im Schalteroberteil 1 einrastet, wenn das Anschlussmodul 3 seine am Schalteroberteil 1 anliegende Betriebsstellung einnimmt. Bei der dargestellten Ausführungsform kann mittels eines Schraubenziehers, der durch eine an der Oberseite des Anschlussmoduls 3 ausgebildete Öffnung 47 eingeschoben werden kann, die Rastzunge 45 nach unten zur Freigabe gegenüber der Öffnung 46 bewegt werden, um anschließend das Anschlussmodul 3 entgegen dem Uhrzeigersinn in die in Fig. 1 bis 3 gezeigte Position zu verlagern.

Wie die Figuren weiter zeigen, ist bei der dargestellten Ausführungsform das Anschlussmodul 3 mit einem Rastzahn 48 versehen. In der Betriebsstellung greift dieser Rastzahn oder die Rastrippe 48 in eine nach außen weisende Aussparung 32 einer Lasche 30 ein, die vom Schalteroberteil 1 nach unten absteht, wie dies bereits vorstehend beschrieben ist. Damit wird das Schalteroberteil 1 im Betriebszustand der Schutzschaltereinrichtung gegen eine Bewegung vom Schalterunterteil 2 weg zumindest im Bereich des Anschlussmoduls 3 gesichert, während das Anschlussmodul 3 selbst durch die Arretiereinrichtung 45 wiederum gegenüber dem Schalteroberteil 1 verriegelt ist. Das Anschlussmodul 3 ist, wie die Figuren 1 bis 2 zeigen, gegenüber dem Schalterunterteil entlang einer Achse 50 verschwenkbar befestigt und weist bei einer bevorzugten Ausführungsform eine nach unten verlängerte Lasche 51 auf. Die Lasche 51 steht in einer Gelenkbeziehung mit einem Hebel 52, der eine Arretierklappe bzw. einen Arretierzahn 53 steuert, derart, dass bei einer Verschwenkung des Anschlussmoduls 3 im Gegenuhrzeigersinn die Arretierklappe 53 um eine Achse 53a im Uhrzeigersinn verschwenkt wird und damit das Schalteroberteil 1 freigibt. Mit der Arretierklappe 53 steht in der Betriebsstellung der Schutzschaltereinrichtung eine Lasche 31 in Eingriff, die mit einer nach außen weisenden Öffnung 33 versehen ist, wie dies vorstehend beschrieben ist, in die wiederum der Zahn 53b der Arretierklappe 53 eingreift, wenn das Anschlussmodul 3 seine Betriebsposition einnimmt.

Mit der beschriebenen Verriegelungseinrichtung oder Arretiereinrichtung, bestehend aus den Elementen 30, 32, 48, 52, 53, 53b, 31 und 33 lässt sich eine Fixierung und Verriegelung des Schalteroberteils 1 gegenüber dem Schalterunterteil 2 gewährleisten.

Ersichtlicherweise kann das Anschlussmodul 3 auch an dem Schalteroberteil schwenkbar gelagert sein und kinematisch in umgekehrter Weise eine Arretierung gegenüber dem Schalterunterteil 2 bewerkstelligt sein.

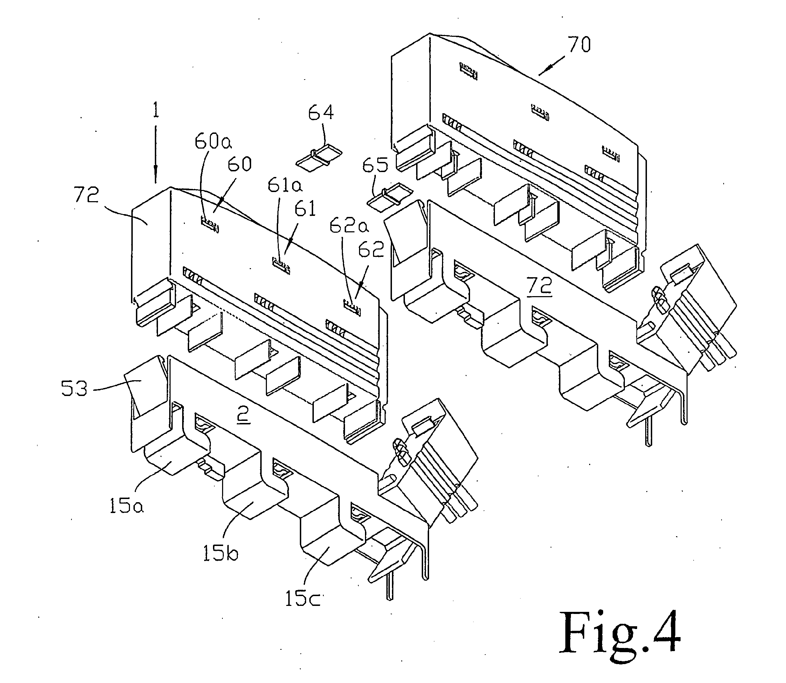

Bei einer weiteren Ausführungsform ist das Schalteroberteil mit seitlichen Öffnungen 60, 61, 62 versehen. In den Öffnungen oder Schlitzen 60, 61, 62 sind Kontakte 60a, 61a, 62a (Fig. 4) vorgesehen, die dazu dienen, eine elektrische Kontaktierung zu einer benachbarten Schutzschaltereinrichtung herstellen zu lassen. Diese Kombinationsmöglichkeit ist zum Beispiel dann erwünscht, wenn anstelle einer einzigen Schutzschaltereinrichtung eine Kombination aus einem Schutzschalter und einem Schütz erwünscht ist oder eine so genannte Wende-Schütz-Kombination, bestehend aus einem Schutzschalter, einem Schütz- und einem Wendeschütz. In Bezug auf Fig. 4 wird dies nachstehend bezüglich einer Schalter-Schütz-Kombination erläutert. Werden beispielsweise zwei Schutzschaltereinrichtungen entsprechend Fig. 4 verwendet, werden die beiden Schutzschaltereinrichtungen über die Kontakte 60a, 61a, 62a und entsprechende Kontaktzungen 64, 65 miteinander verbunden, die mit den einander zugewandten Kontakten 60a, 61a, 62a der benachbarten Schutzschaltereinrichtung 70 in elektrischen Kontakt versetzt werden. In diesem Falle werden an der Unterseite der Schutzschaltereinrichtung die Kontakte 17, 18, 19 bezüglich des mit 1 in Fig. 4 bezeichneten Schalteroberteils entfernt, wie dies in Fig. 4 auch angedeutet ist, während die Schutzschaltereinrichtung 70 entsprechende Kontakte 17, 18, 19 zur Kontaktierung der Stromsammelschienen aufweist.

Im Übrigen sind beide Elemente 1 bzw. 70 sowie auch das Schalterunterteil 2 bzw. 72 vorzugsweise identischen Aufbaus.

Bei einer bevorzugten Ausführungsform ist vorgesehen, dass die Steckkontakte 17, 18, 19 an der Unterseite des Schalteroberteils 1 entfernbar angeordnet sind und entsprechend der Verwendung nach Fig. 4 seitlich in die Öffnungen 60, 61 62 als Kontaktzungen einschiebbar und verwendbar sind.

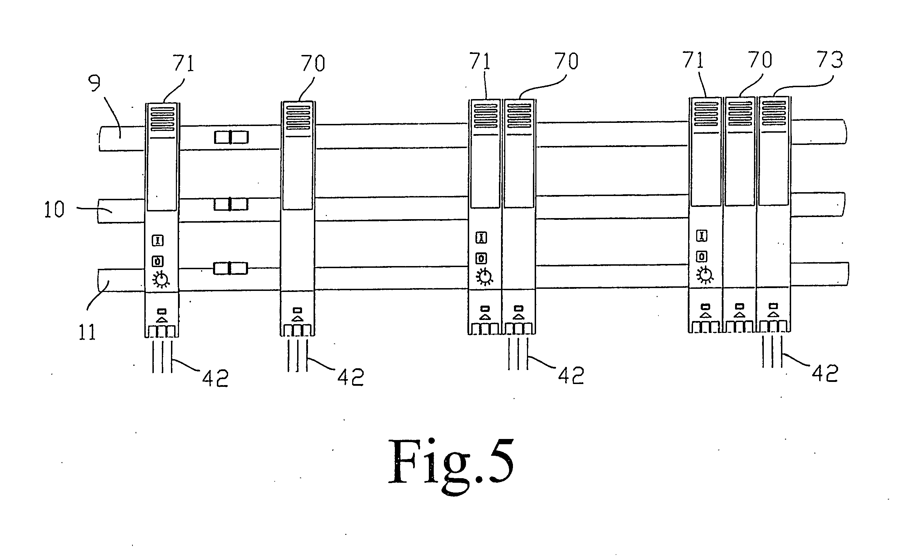

Fig. 5 zeigt die Verwendung der erfindungsgemäßen Schutzschaltereinrichtung als Motorschutzschalter oder als Schütz. Der Einsatz zwei derartiger Schutzschaltereinrichtungen mit entsprechenden elektrischen Verbindungen wird als Schalter-Schütz-Kombination verwendet, während der Einsatz drei solcher Einheiten mit entsprechend abgewandelter Kontaktierung findet Benützung als Wende-Schütz-Kombination.

Fig. 5 zeigt im Einzelnen als Fig. 5a eine Darstellung, bei welcher die erfindungsgemäße Schutzschaltereinrichtung als Motorschutzschalter verwendet wird, das heißt, die Schutzschaltereinrichtung über das Schalterunterteil elektrisch mit den Stromsammelschienen 9, 10, 11 in Verbindung steht und die Abgangsleitungen 42 an den nicht weiter dargestellten Motor angeschlossen sind.

Entsprechend Fig. 5b dient die Schutzschaltereinrichtung als Schütz, das heißt, die Abgangsleitungen 42 sind an den nicht dargestellten Verbraucher in Form eines Motors angeschlossen. Bei Fig. 5c findet eine Doppelkombination Anwendung, das heißt, es sind zwei Schutzschaltereinrichtungen vorgesehen, von welchen der in Fig. 5c rechte als Schütz fungiert und mit 70 bezeichnet ist, während der vorgeschaltete Schalter als Schutzschalter agiert, welcher mit den Stromsammelschienen in elektrischem Kontakt steht, während der Schütz 70 mit den Stromsammelschienen 9, 10, 11 nicht in elektrischer Verbindung steht, jedoch führen seine Abgangsleitungen 42 zum nachgeschalteten Motor bzw. Verbraucher.

Fig. 5d zeigt drei nebeneinander liegend angeordnete Schutzschaltereinrichtungen als Wende-Schütz-Kombination, das heißt mit einem Schutzschalter 71, einem Schütz 70 und einem Wendeschütz 73, der die Abgangsleitungen 42 aufweist, die zum Verbraucher bzw. Motor führen. Dementsprechend sind in Fig. 5c die beiden zueinander benachbart angeordneten Einrichtungen über seitliche Kontakte entsprechend der Erläuterung zu Fig. 4 miteinander verbunden, wie sie dort durch die Kontaktzungen 64, 65 gezeigt sind, zur Gewährleistung der Funktion jeder einzelnen Einheit. Mit anderen Worten heißt dies, dass zwischen jeder Einrichtung drei Kontaktzungen vorgesehen sind, wie dies in Verbindung mit Fig. 4 erläutert ist. Entsprechend sind die drei Schutzschalteinrichtungen nach Fig. 5d über derartige Kontaktzungen miteinander verbunden.

Wie die vorstehende Beschreibung zeigt, ist die erfindungsgemäße Schutzschaltereinrichtung sowohl als Schütz als auch als Wendeschütz oder Sicherungsschalter einsetzbar und hat vorzugsweise durch den kompakten Aufbau schmale Bauweise, wobei mehrere derartige Schutzschaltereinrichtungen nebeneinander vorsehbar sind bei entsprechend unterschiedlich gestalteter Kontaktierung. Die Abgangsleitungen sind in einem separaten, mit der Schutzschaltereinrichtung in Funktion stehenden Anschlussmodul 3 berührungssicher geklemmt.

Zum Zwecke des Austausches des Schalteroberteils 1 wegen eines Defekts oder aus anderen Gründen lässt sich das Schalteroberteil 1 auf einfache Weise gegenüber dem Schalterunterteil 2 nach entsprechender Entsicherung des Anschlussmodules 3 austauschen und das neue Schalteroberteil 1 wieder aufsetzen.

Die erfindungsgemäße Schutzschaltereinrichtung ist so aufgebaut, dass die elektromechanischen Bauteile, soweit dies das Schalteroberteil 1 und das Schalterunterteil 2 angeht, übereinander liegend vorgesehen sind und das Anschlussmodul 3 für die Abgangsleitungen sich seitlich und schwenkbar angelenkt gegenüber dem Schalteroberteil 1 und dem Schalterunterteil 2 befindet. Damit wird sicher gestellt, dass die gesamte Einheit mit diesen drei Komponenten in einem Zuge leicht und schnell auf die Stromsammelschienen aufgeklipst werden kann unter Beinhaltung eines üblichen Sperrmechanismus verbunden mit den Klemmfüßen 15a, 15b, 15c (Fig. 1) wobei der Sperrmechanismus - beispielsweise in Form der Rastzähne 16 - eine Klemm- oder Haltewirkung gegenüber den Stromsammelschienen 9, 10, 11 bewirkt. Selbst in diesem Zustand können im Falle eines erforderlichen Austausches des Schalteroberteils 1 Schalterunterteil 2 und Anschlussmodul 3 an Ort und Stelle verbleiben, indem entsprechend der vorstehenden Beschreibung das Anschlussmodul 3 hinsichtlich einer Verriegelungseinrichtung 45 gegenüber der gesamten Einheit geöffnet wird, wonach dann eine zweite Verriegelungseinheit mit der Steuerstange oder dem Steuerhebel 52 eine Entfernung des Schalteroberteils 1 gegenüber dem Schalterunterteil 2 ermöglicht. Diese mechanische Verriegelung, bestehend aus den Elementen 30, 32, 48, 52, 53, 53b, 31, 33 ermöglicht nach dem Aufsetzen eines neuen Schalteroberteils 1 wiederum eine automatische Verriegelung zum Schalterunterteil infolge einer Schwenkbewegung des Anschlussmoduls 3 während dessen Schwenkbewegung im Uhrzeigersinn.

Während der Austauschphase des Schalteroberteils 1 bleibt das Sammelschienensystem 9, 10, 11 durch das auf diesem verbleibenden Schalterunterteil 2 berührungsgeschützt, und es erübrigt sich, die restlichen auf dem Sammelschienensystem angebrachten Verbraucher abzuschalten.

Bei einer weiteren Ausführungsform ist das Schalteroberteil 1 mit Lüftungskanälen 80, 81, 82 ausgerüstet, die vorzugsweise - in Schnittansicht - halbrund ausgebildet sind und mit den entsprechenden Lüftungskanälen benachbarter Schutzschaltereinrichtungen kommunizieren und bei direkt nebeneinander angeordneten Schutzschaltereinrichtungen in Horizontalrichtungen, das heißt parallel zu den Stromsammelschienen 9, 10, 11 verlaufende kreisrunde Lüftungskanäle ergeben, wodurch die Warmluftabfuhr stirnseitig der Schutzschaltereinrichtungen gewährleistet, nämlich stirnseitig dort, wo sämtliche Lüftungskanäle herausgeführt sind. Zusätzlich kann auch oberhalb jeder Schutzschaltereinrichtung eine oder mehrere Entlüftungsöffnungen vorgesehen sein, wie dies in Fig. 2 durch das Bezugszeichen 84 gezeigt ist.

Die Ausbildung der beschriebenen Verriegelungseinheiten stellt ferner sicher, dass ein unbeabsichtigtes Entfernen bzw. eine unbeabsichtigte Demontage der kompletten Schutzschaltereinrichtung verhindert wird und spannungsführende Stromsammelschienen berührt werden können.

Sowohl in Fig. 1 als auch in Fig. 2 ist das Schalterunterteil 2 seitlich teilweise aufgebrochen dargestellt. Aus Fig. 2 ergibt sich beispielsweise, dass aufgrund der Gehäusestruktur im Bereich der Schlitze 12, 13, 14 die dort zugehörigen Kontakte 5, 6, 7 durch Gehäuseabschnitte 12a, 13a, 14a sowohl seitlich als auch nach oben abgeschlossen sind, das heißt berührungssicher gestaltet sind, derart, dass die Verbindungskontakte 17, 18, 19 (Fig. 1) über die Schlitze 12, 13, 14 elektrisch mit den Kontakten 5, 6, 7 in Verbindung gebracht werden können, während bei abgezogenem Schalteroberteil 1 diese Kontakte 5, 6, 7 berührungssicher durch die Gehäuseabschnitte 12a, 13a, 14a eingeschlossen sind. Die Höhe dieser Gehäuseabschnitte 12a, 13a, 14a entspricht vorzugsweise der Höhe einer mit 12d bezeichneten Seitenwand. Die Seitenwandung verläuft vorzugsweise über die gesamte Länge des Schalterunterteils 2, wie dies aus Fig. 1 und 2 ersichtlich ist.

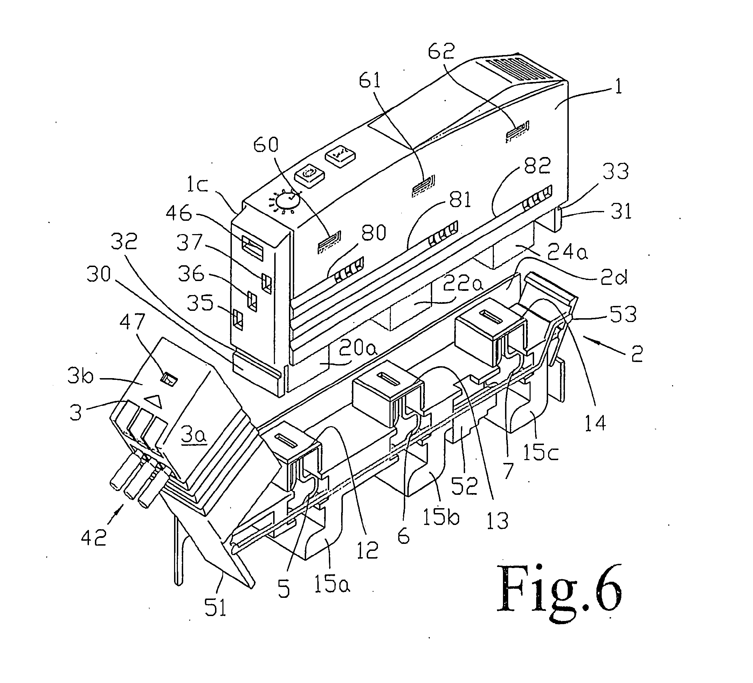

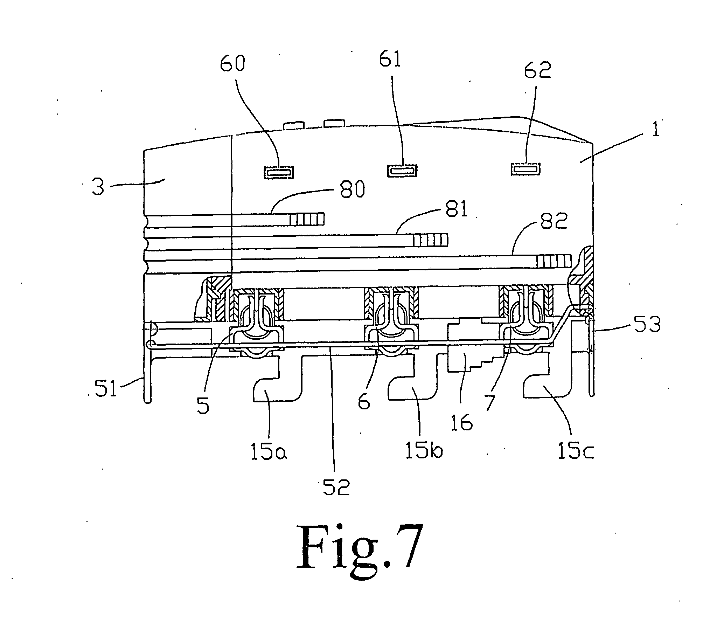

Nunmehr wird auf die Figuren 6 und 7 Bezug genommen. Gegenüber den vorangehenden Figuren gleiche Teile sind in den Figuren 6 und 7 mit gleichen Bezugszeichen versehen.

Fig. 6 zeigt eine gegenüber Fig. 1 folgende abgewandelte Ausführungsform. Sowohl in Fig. 6 als auch in Fig. 7 ist hinsichtlich des Schalterunterteils 2 ein Teil aufgebrochen dargestellt.

Aus Fig. 6 ist ferner ersichtlich, dass die Seitenwände 3a etwa gleiche Tiefe haben wie die obere Wandung 3b des Anschlussmoduls 3, so dass die Kontaktzungen 38, 39, 40 des Anschlussmoduls 3 vollständig durch das Gehäuse bzw. die Wände 3a, 3b berührungssicher umgeben sind.

Bei der Ausführungsform nach Fig. 6 und 7 ist die Berührungssicherheit der einzelnen Teile gegenüber der Ausführungsform nach Fig. 1 noch weitergehend verbessert, wie dies nachfolgend beschrieben wird. In Bezug auf das Schalteroberteil 1 ist bei der Ausführungsform nach Fig. 6 und 7 anstelle der seitlichen Abdecklaschen 20, 21 bezüglich jeden Kontaktes 17, 18, 19 ein Schutzkragen 20a, 22a, 24a vorgesehen. Der Schutzkragen hat bei der dargestellten Ausführungsform vorzugsweise eine Öffnungsfläche, die zumindest etwas größer ist als die Oberfläche der Gehäuseabschnitte 12, 13, 14, welche die Schlitze 12, 13, 14 enthalten. Die Höhe der Schutzkragen 20a, 22a, 24a ist mindestens so hoch wie die vom Schalteroberteil 1 nach unten abstehenden Kontakte 17, 18, 19, vorzugsweise aber noch höher als diese gewählt. Damit sind die Kontakte 17, 18, 19 seitlich vollständig durch die Schutzkragen 20a, 22a, 24a berührungssicher abgedeckt und damit wird bei einem Abziehen des Schalteroberteils 1, zum Beispiel zum Zwecke des Austausches durch ein neues Schalteroberteil, auch bei unter Strom stehenden Sammelschienen die Gefahr eines Eingriffs von Hand in den Bereich zwischen den Gehäuseabschnitten 12a, 13a, 14a bzw. den Kontakten 17, 18, 19 vollständig beseitigt.

Vorzugsweise wird entsprechend der in Fig. 6 und 7 gezeigten Darstellung das Anschlussmodul 3 bezüglich seiner zueinander parallelen Seitenwände, von welchen in Fig. 6 und 7 nur die Seitenwand 3a gezeigt ist, so verlängert, dass die Kontaktzungen 38, 39, 40 (Fig. 1) ebenfalls seitlich abgedeckt werden. Dies hat zur Folge, dass bei im Betrieb befindlichen Gerät auch bei einer geringfügigen Schwenkbewegung des Anschlussmoduls 3 in Fig. 1 bzw. Fig. 6 im Gegenuhrzeigersinn betrachtet ein Zugang zu den Kontaktzungen 38, 39, 40 verhindert wird, das heißt, dass die Berührungssicherheit sehr hoch ist, auch wenn davon ausgegangen werden kann, dass bereits eine geringe Schwenkbewegung des Anschlussmoduls 3 gemäß Fig. 1 im Gegenuhrzeigersinn dazu führt, dass die Kontaktzungen 38, 39, 40 stromfrei wären. Mit anderen Worten heißt dies, dass bei der Ausführungsform nach Fig. 6 und 7 die Seitenwände 3a des Anschlussmoduls 3 in Richtung auf das Schalteroberteil eine Länge haben, derart, dass die Kontaktzungen 38, 39, 40 seitlich abgedeckt sind oder die Kontaktzungen 38, 39, 40 sogar innerhalb dieser Wände liegen bzw. die Seitenwände 3a zumindest geringfügig über die Kontaktzungen 38, 39, 40 in Richtung auf das Schalteroberteil 1 überstehen. Im Betriebszustand (Fig. 7) ist damit das Anschlussmodul hinsichtlich seines Gehäuses einschließlich der Seitenwände 3a so gestaltet, dass es einen mit 1c bezeichneten seitlichen Unterabschnitt, der die Kontaktöffnungen 35, 36, 37 sowie die Rastöffnung 46 beinhaltet, überdeckt bzw. auf diesen aufgesetzt ist. Der Gehäuseunterabschnitt 1c weist daher eine geringere Querschnittsfläche auf als das restliche Gehäuse des Schalteroberteils 1, wie dies aus Fig. 6 erkennbar ist.

Fig. 7 zeigt eine Darstellung der Schutzschaltereinrichtung in der Betriebsposition, das heißt in derjenigen Position, in der Schalteroberteil 1, Schalterunterteil 2 und Anschlussmodul 3 fest miteinander verbunden bzw. verrastet sind und in welcher Position die Kontakte 17, 18, 19 in die Gegenkontakte bzw. Gegenkontaktzungen 5, 6, 7 eingesetzt sind.

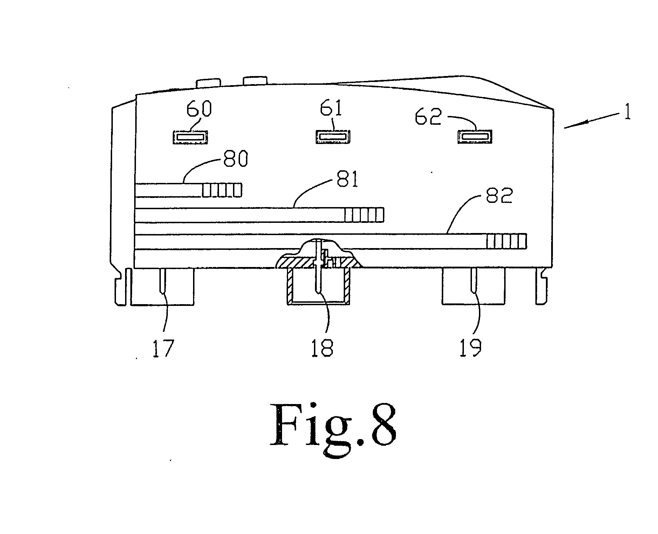

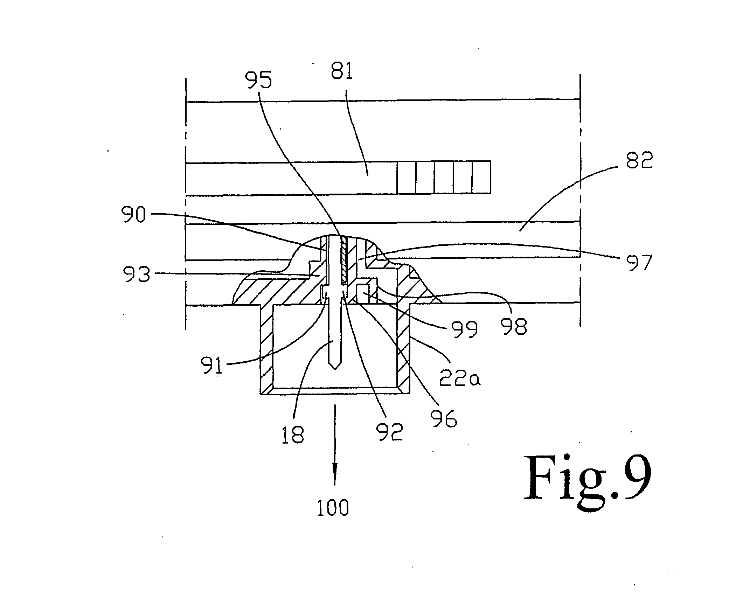

Fig. 8 ist eine Seitenansicht eines Schalteroberteils, welches vorzugsweise der Ausführungsform nach Fig. 6 entspricht. Durch Wegschnitt der Seitenwandung ist die Lagerung eines der Kontaktelemente 18 dargestellt. Fig. 9 ist eine Detaildarstellung zur Veranschaulichung einer bevorzugten Ausführungsform der Lagerung der Kontakte 17, 18, 19, wobei die Darstellung auf den Kontakt 18 abgestellt ist. Wie bereits vorstehend erläutert wurde, kann es bei einer Parallelanordnung eines Motorschutzschalters und eines Schützes entsprechend Fig. 5c oder einer Wendeschützkombination entsprechend Fig. 5d möglich oder notwendig sein, einzelne der Kontakte 17, 18, 19 vom Schalteroberteil zu entfernen und stattdessen eine elektrische Verbindung zwischen den benachbarten Einheiten über die in den Schlitzen 60, 61, 62 befindlichen Kontakte herzustellen. Gemäß einer bevorzugten Ausführungsform sind aus diesem Grund die Kontakte 17, 18, 19 entfernbar an dem Schalterunterteil 1 gelagert, wobei bei der Ausführungsform nach Fig. 8 bei eingesetzten Kontakten 17, 18, 19 diese von den Schutzlaschen 20, 21 usw. oder vollständig durch die Sockel 20a, 22a, 24a umgeben sind, um eine berührungssichere Anordnung dieser Kontakte zu gewährleisten.

Zur vereinfachten Darstellung sind in Fig. 8 und 9 diejenigen Bezugszeichen weggelassen, welche nicht die Lagerung des Kontaktes 18 betreffen.

Bei einer bevorzugten Ausführungsform der Schutzschaltereinrichtung ist für jeden Kontakt 17, 18, 19 entsprechend Fig. 9 ein im Wesentlichen vertikal verlaufender Schlitz an der unteren Seite des Schalteroberteils ausgebildet, der in Fig. 9 mit dem Bezugszeichen 90 angedeutet ist. Jeder Kontakt 17, 18, 19 hat vorzugsweise zwei zur Längsebene der Kontakte seitlich abstehende Stege 91, 92, von welchen mindestens einer der Stege 91 in einer stufenförmigen Schlitzaufnahme des Schalteroberteils aufgenommen wird, wobei diese stufenförmige Aufnahme mit 93 bezeichnet ist. Bei dieser Lagerungsvariante des Kontaktes 18 ist auf der zur stufenförmigen Aufnahme 93, die vorzugsweise aus Isoliermaterial besteht, gegenüberliegenden Seite ein Streifen oder Steg 95 vorgesehen, der entweder aus Isoliermaterial oder aus elektrisch leitendem Material besteht und in letzterem Fall einen elektrischen Kontakt zum Kontakt 18 herstellt. Wenn der Steg oder Streifen 95 aus Isoliermaterial besteht, ist die elektrische Kontaktierung des Kontaktes 18 oberhalb des Kontaktes 18 in nicht näher dargestellter Weise vorgesehen.

Zur Fixierung des Kontaktes 18 dient ein Rasthaken 96, der auf einem Steg 97 befestigt ist oder als integraler Bestandteil des Steges 97 in der in Fig. 9 gezeigten Weise nach unten absteht, wobei der Steg 97 seitlich verstellbar ist. An dem Steg 97 ist ein vom Rasthaken 96 sich abgabelnder Abschnitt 98 vorgesehen, der zum Rasthaken 96 durch einen Schlitz 99 beabstandet ist, wie aus Fig. 9 ersichtlich wird.

Der Schlitz 99 dient dazu, ein Werkzeug aufzunehmen, beispielsweise einen Schraubenzieher, mit dessen Hilfe der Steg 97 mit. Rasthaken 96 in Fig. 9 von dem Kontakt 18 nach rechts weg verlagert werden kann, wodurch der Steg 92 des Kontaktes 18 gegenüber dem Rasthaken 96 freigegeben werden kann und der Kontakt 18 aus dem Schalteroberteil nach unten in Richtung eines Pfeils 100 heraus verlagert werden kann. Damit wird bei aufgesetztem Schalteroberteil 1 auf das Schalterunterteil 2 keine Kontaktierung gegenüber dem Kontakt 6 ermöglicht, vielmehr wird das Kontaktelement 18 in den innerhalb des Schlitzes 61 befindlichen Kontakt eingeschoben, um eine Überbrückung zum benachbarten Modul herzustellen.

Wesentlich ist, dass zur Lagerung der Kontakte 17, 18, 19 eine entriegelbare Rasteinrichtung vorgesehen ist, welche die Arretierung und Entfernung des Kontaktes 17, 18, 19 je nach Bedarf, das heißt eines oder mehrere dieser Kontakte ermöglicht, andererseits die Arretierung dieser Kontakte im Bedarfsfall sicherstellt.

## Patentansprüche

1. Schutzschaltereinrichtung, bestehend aus einem mit Stromsammelschienen in elektrischen Kontakt verbringbaren Schalterunterteil (2),
einem auf das Schalterunterteil (2) aufsetzbaren Schalteroberteil (1) mit mindestens einem Sicherungseinsatz, Schaltermodul, Schütz oder dergleichen, und mit einem Anschlussmodul (3) für insbesondere mindestens eine Abgangsleitung (42),
bei der das Schalterunterteil (2) mit den Stromsammelschienen (9, 10, 11) in elektrischem Kontakt befindliche Kontaktelemente (5, 6, 7) aufweist, die über jeweils einen Zugangsschlitz (12, 13, 14) in einer oberen Fläche des Schalterunterteils (2) berührungssicher durch Steckkontakte (17, 18, 19) des Schalteroberteils (1) kontaktierbar sind, **dadurch gekennzeichnet,**
**dass** das Anschlussmodul (3) seitlich am Schalteroberteil (1) oder Schalterunterteil (2) schwenkbar gelagert (50) und mit seitlich in das Schalteroberteil (1) einschiebbaren, jeder Abgangsleitung (42) zugeordneten elektrischen Kontakten (38, 39, 40) versehen ist.

2. Schutzschaltereinrichtung nach Anspruch 1,
**dadurch gekennzeichnet,**
**dass** das Schalteroberteil (1) seitliche Öffnungen (35, 36, 37) zur berührungssicheren Aufnahme von innerhalb des Schalteroberteils (1) angeordneten Gegenkontakten für die elektrischen Kontakte (38, 39, 40) des Anschlussmoduls (3) aufweist.

3. Schutzschaltereinrichtung nach Anspruch 2,
**dadurch gekennzeichnet,**
**dass** die seitlichen Öffnungen (35, 36, 37) zueinander seitlich versetzt vorgesehen sind.

4. Schutzschaltereinrichtung nach wenigstens einem der vorangehenden Ansprüche,
**dadurch gekennzeichnet,**
**dass** zwischen dem Schalteroberteil (1) und dem Schalterunterteil (2) eine von der Schwenkbewegung des Anschlussmoduls (3) gesteuerte Verriegelungseinrichtung (52, 53, 53a, 53b) vorgesehen ist.

5. Schutzschaltereinrichtung nach wenigstens einem der vorangehenden Ansprüche,
**dadurch gekennzeichnet,**
**dass** die Steckkontakte (17, 18, 19) des Schalteroberteils (1) an dessen unterer Seite abstehen und zumindest seitlich durch Führungs- oder Schutzlaschen (20, 21, 22, 23, 24, 25,) eingefasst sind.

6. Schutzschaltereinrichtung nach wenigstens einem der vorangehenden Ansprüche,
**dadurch gekennzeichnet,**
**dass** das Anschlussmodul (3) mindestens eine mit dem Schalteroberteil (1) oder Schalterunterteil (2) in Verriegelungseingriff bringbare Verriegelungs- bzw. Rasteinrichtung (45; 52, 53) aufweist.

7. Schutzschaltereinrichtung nach wenigstens einem der vorangehenden Ansprüche,
**dadurch gekennzeichnet,**
**dass** das Gehäuse (1a) des Schalteroberteils (1) jeweils seitliche Öffnungen oder Schlitze (60, 61, 62) zur Aufnahme von Kontaktzungen (64, 65) aufweist.

8. Schutzschaltereinrichtung nach wenigstens einem der vorangehenden Ansprüche,
**dadurch gekennzeichnet,**
**dass** die Steckkontakte (17, 18, 19) des Schalteroberteils (1) entfernbar angeordnet sind.

9. Schutzschaltereinrichtung nach Anspruch 8,
**dadurch gekennzeichnet,**
**dass** die Steckkontakte (17, 18, 19) größenmäßig auf die Öffnungen (60, 61, 62) seitlich im Gehäuse (1a) des Schalteroberteils (1) und die dort vorgesehenen Gegenkontakte abgestimmt sind.

10. Schutzschaltereinrichtung nach wenigstens einem der vorangehenden Ansprüche,
**dadurch gekennzeichnet,**
**dass** das Anschlussmodul (3) gelenkig mit dem Schalterunterteil (2) verbunden ist.

11. Schutzschaltereinrichtung nach Anspruch 10,
**dadurch gekennzeichnet,**
**dass** eine zweite Verriegelungseinrichtung (52, 53) vorgesehen ist.

12. Schutzschaltereinrichtung nach Anspruch 11,
**dadurch gekennzeichnet,**
**dass** die zweite Verriegelungseinrichtung an einen verstellbaren Hebel (52) gekuppelt ist, welcher einen auf der zum Anschlussmodul (3) abgewandten Seite des Schalterunterteils (2) angeordneten Verriegelungshebel (53) steuert, der mit dem Schalterunterteil (2) in Verriegelungseingriff verlagerbar ist.

13. Schutzschaltereinrichtung nach Anspruch 12,
**dadurch gekennzeichnet,**
**dass** der Hebel (52) mit dem Anschlussmodul (3) mechanisch gekuppelt ist.

14. Schutzschaltereinrichtung nach wenigstens einem der vorangehenden Ansprüche,
**dadurch gekennzeichnet,**
**dass** jedes Schalterunterteil (2) Rastfüße (13, 14, 15) zum Untergreifen von Stromsammelschienen (15a, 15b, 15c) sowie gegebenenfalls eine Arretier- bzw. Klemmeinrichtung (16) aufweist.

15. Schutzschaltereinrichtung nach wenigstens einem der vorangehenden Ansprüche,
**dadurch gekennzeichnet,**
**dass** mindestens zwei Schutzschaltereinrichtungseinheiten nebeneinander liegend auf Stromsammelschienen (9, 10, 11) angeordnet und durch Kontaktzungen (64, 65) seitlich elektrisch miteinander verbunden sind.

16. Schutzschaltereinrichtung nach wenigstens einem der vorangehenden Ansprüche,
**dadurch gekennzeichnet,**
**dass** jedes Anschlussmodul (3) Federzüge (34) zum Anschluss von Abgangsleitungen (42) aufweist.

17. Schutzschaltereinrichtung nach wenigstens einem der vorangehenden Ansprüche,
**dadurch gekennzeichnet,**
**dass** sie mindestens einen Schalter (71) und einen Schütz (70) aufweist, die parallel zueinander liegend auf den Sammelschienen (9, 10, 11) angeordnet sind, wobei der Schalter (71) und der Schütz (70) über zwischen letzteren vorgesehene Zusatzkontakte (64, 65) elektrisch verbunden sind.

18. Schutzschaltereinrichtung nach Anspruch 17,
**dadurch gekennzeichnet,**
**dass** mindestens ein Schalter (71), ein Schütz (70) und ein Wendeschütz (73) vorgesehen sind, deren elektrische Verbindung durch Kontaktelemente (64, 65) erfolgt, die in die seitlichen Öffnungen (60, 61, 62) zwischen letzteren eingesetzt sind.

19. Schutzschaltereinrichtung nach wenigstens einem der vorangehenden Ansprüche,
**dadurch gekennzeichnet,**
**dass** eine aus einem Schutzschalter (71), einem Schütz (70) und/oder einem Wendeschütz (71) gebildete Kombination in zumindest Teil-Serienschaltung vorgesehen ist.

20. Schutzschaltereinrichtung nach wenigstens einem der vorangehenden Ansprüche,
**dadurch gekennzeichnet,**
**dass** die Steckkontakte (17, 18, 19) des Schalteroberteils (1) durch Schutzkragen (20a, 22a, 24a) umgeben sind.

21. Schutzschaltereinrichtung nach wenigstens einem der vorangehenden Ansprüche,
**dadurch gekennzeichnet,**
**dass** das Schalterunterteil (2) durch Gehäuseabschnitte (12a, 13a, 14a) gebildete Schutzkammern für die im Schalterunterteil (2) angeordneten Kontakte bzw. Kontaktzungen (5, 6, 7) aufweist, derart, dass diese Kontakte (5, 6, 7) berührungssicher im Schalterunterteil (2) untergebracht sind.

22. Schutzschaltereinrichtung nach wenigstens einem der vorangehenden Ansprüche,
**dadurch gekennzeichnet,**
**dass** das Anschlussmodul (3) Seitenwände (3a) aufweist, welche seitlich die im Anschlussmodul (3) vorgesehenen Kontaktzungen (38, 39, 40) abdecken bzw. gegebenenfalls über die Kontaktzungen hinwegstehen.

23. Schutzschaltereinrichtung nach Anspruch 22 **dadurch gekennzeichnet,**
**dass** die Seitenwände (3a) und die die Öffnung (47) beinhaltende obere Fläche (3b) ein Gehäuse-Anschlussteil (1c) des Schalteroberteils (1) im Betriebszustand zumindest teilweise einfassen.

24. Schutzschaltereinrichtung nach wenigstens einem der vorangehenden Ansprüche,
**dadurch gekennzeichnet,**
**dass** das Schalteroberteil (1) an seiner unteren Seite jeweils eine jedem Kontakt (17, 18, 19) zugeordnete lösbare Arretiereinrichtung (92, 96, 97, 98) aufweist.

25. Schutzschaltereinrichtung nach Anspruch 24, **dadurch gekennzeichnet,**
**dass** jedem Kontakt (17, 18, 19) eine Aufnahme (93, 98) zugeordnet ist.

26. Schutzschaltereinrichtung nach Anspruch 24 oder 25,
**dadurch gekennzeichnet,**
**dass** jeder Kontakt (17, 18,19) mit Gegenlagern (91, 92) versehen ist.

## Claims

1. Circuit-breaker device consisting of a lower switch part (2) to be brought into electrical contact with current busbars,
an upper switch part (1) which can be placed on the lower switch part (2) and comprises at least one fuse link, switch module, contactor or the like, and comprises a connection module (3) for at least one outgoing circuit (42) in particular,
in which the lower switch part (2) has contact elements (5, 6, 7) which are in electrical contact with the current busbars (9, 10, 11) and which can each be contacted by plug contacts (17, 18, 19) of the upper switch part (1) in a touch-safe manner via an access slot (12, 13, 14) in an upper face of the lower switch part (2),
**characterised in that** the connection module (3) is pivotably mounted (50) laterally on the upper switch part (1) or the lower switch part (2) and is provided with electrical contacts (38, 39, 40) which are extendable laterally into the upper switch part (1) and are associated with each outgoing circuit (42).

2. Circuit-breaker device according to claim 1,
**characterised in that**
the upper switch part (1) has lateral openings (35, 36, 37) for receiving in a touch-safe manner counter-contacts arranged inside the upper switch part (1) for the electrical contacts (38, 39, 40) of the connection module (3).

3. Circuit-breaker device according to claim 2,
**characterised in that**
the lateral openings (35, 36, 37) are provided so as to be laterally offset from one other.

4. Circuit-breaker device according to at least one of the preceding claims,
**characterised in that**
a locking means (52, 53, 53 a, 53b) controlled by the pivoting movement of the connection module (3) is provided between the upper switch part (1) and the lower switch part (2).

5. Circuit-breaker device according to at least one of the preceding claims,
**characterised in that**
the plug contacts (17, 18, 19) of the upper switch part (1) project from the lower side thereof and are at least laterally bordered by guide brackets or protective brackets (20, 21, 22, 23, 24, 25).

6. Circuit-breaker device according to at least one of the preceding claims,
**characterised in that**
the connection module (3) has at least one locking or latching means (45; 52, 53) to be brought into interlocking engagement with the upper switch part (1) or the lower switch part (2).

7. Circuit-breaker device according to at least one of the preceding claims,
**characterised in that**
the housing (1a) of the upper switch part (1) has in each case lateral openings or slots (60, 61, 62) for receiving contact tongues (64, 65).

8. Circuit-breaker device according to at least one of the preceding claims,
**characterised in that**
the plug contacts (17, 18, 19) of the upper switch part (1) are arranged in a removable manner.

9. Circuit-breaker device according to claim 8,
**characterised in that**
the size of the plug contacts (17, 18, 19) is matched with the size of the openings (60, 61, 62) provided laterally in the housing (1a) of the upper switch part (1) and of the counter-contacts provided therein.

10. Circuit-breaker device according to at least one of the preceding claims,
**characterised in that**
the connection module (3) is connected to the lower switch part (2) in an articulated manner.

11. Circuit-breaker device according to claim 10,
**characterised in that**
a second locking means (52, 53) is provided.

12. Circuit-breaker device according to claim 11,
**characterised in that**
the second locking means is coupled to an adjustable lever (52) which controls a locking lever (53) arranged on the side of the lower switch part (2) remote from the connection module (3), the locking lever being displaceable to enter into locking engagement with the lower switch part (2).

13. Circuit-breaker device according to claim 12,
**characterised in that**
the lever (52) is mechanically coupled to the connection module (3).

14. Circuit-breaker device according to at least one of the preceding claims,
**characterised in that**
each lower switch part (2) has latching feet (13, 14, 15) for engaging current busbars (15a, 15b, 15c) from below and, if required, a locking or clamping means (16).

15. Circuit-breaker device according to at least one of the preceding claims,
**characterised in that**
at least two circuit-breaker device units are arranged on current busbars (9, 10, 11) to lie side by side and are laterally electrically connected with one other by contact tongues (64, 65).

16. Circuit-breaker device according to at least one of the preceding claims,
**characterised in that**
each connection module (3) has spring-type terminals (34) for connecting outgoing circuits (42).

17. Circuit-breaker device according to at least one of the preceding claims,
**characterised in that**
it has at least one switch (71) and one contactor (70) arranged on the busbars (9, 10, 11) to lie parallel to each other, the switch (71) and the contactor (70) being electrically connected by additional contacts (64, 65) provided between the latter.

18. Circuit-breaker device according to claim 17,
**characterised in that**
at least one switch (71), one contactor (70) and one reversing contactor (73) are provided, and are electrically connected by contact elements (64, 65) inserted into the lateral openings (60, 61, 62) between the latter.

19. Circuit-breaker device according to at least one of the preceding claims,
**characterised in that**
a combination formed of a circuit breaker (71), a contactor (70) and/or a reversing contactor (71) is provided connected in series at least in part.

20. Circuit-breaker device according to at least one of the preceding claims,
**characterised in that**
the plug contacts (17, 18, 19) of the upper switch part (1) are bordered by protective collars (20a, 22a, 24a).

21. Circuit-breaker device according to at least one of the preceding claims,
**characterised in that**
the lower switch part (2) has protection chambers formed by housing portions (12a, 13a, 14a) for the contacts or contact tongues (5, 6, 7) arranged in the lower switch part (2), in such a way that these contacts (5, 6, 7) are housed in the lower switch part (2) in a touch-safe manner.

22. Circuit-breaker device according to at least one of the preceding claims,
**characterised in that**
the connection module (3) comprises side walls (3a) laterally covering the contact tongues (38, 39, 40) provided in the connection module (3) or, if appropriate, projecting over the contact tongues.

23. Circuit-breaker device according to claim 22,
**characterised in that**
the lateral walls (3a) and the upper face (3b) containing the opening (47) border, at least in part, a housing connecting part (1c) of the upper switch part (1) in the operating mode.

24. Circuit-breaker device according to at least one of the preceding claims,
**characterised in that**
the upper switch part (1) has on its lower side a detachable securing means (92, 96, 97, 98) associated with each contact (17, 18, 19) respectively.

25. Circuit-breaker device according to claim 24,
**characterised in that**
a socket (93, 98) is associated with each contact (17, 18, 19).

26. Circuit-breaker device according to either claim 24 or claim 25,
**characterised in that**
each contact (17, 18, 19) is provided with thrust bearings (91, 92).

## Revendications

1. Système de commutateur de protection comprenant une partie inférieure de commutateur (2) pouvant être amenée en contact électrique avec des barres omnibus de courant, une partie supérieure de commutateur (1) pouvant être montée sur la partie inférieure de commutateur (2) et présentant au moins une cartouche fusible, un module de commutateur et un contacteur ou analogue, et comprenant un module de raccordement (3) pour notamment au moins une ligne de départ (42), dans lequel la partie inférieure de commutateur (2) présente des éléments de contact (5, 6, 7) se trouvant en contact électrique avec les barres omnibus de courant (9, 10, 11) et qui peuvent être mis en contact dans une surface supérieure de la partie inférieure de commutateur (2), via une fente d'accès (12, 13, 14), en étant protégés contre les contacts accidentels par des contacts à fiches (17, 18, 19) de la partie supérieure de commutateur (1), **caractérisé en ce que** le module de raccordement (3) est monté de façon pivotante (50) sur le côté de la partie supérieure de commutateur (1) ou de la partie inférieure de commutateur (2) et est doté de contacts électriques (38, 39, 40) affectés à chaque ligne de départ (42) et pouvant être insérés latéralement dans la partie supérieure de commutateur (1).

2. Système de commutateur de protection selon la revendication 1, **caractérisé en ce que** la partie supérieure de commutateur (1) présente des ouvertures latérales (35, 36, 37) permettant le logement protégé de contacts complémentaires disposés à l'intérieur de la partie supérieure de commutateur (1) pour les contacts électriques (38, 39, 40) du module de raccordement (3).

3. Système de commutateur de protection selon la revendication 2, **caractérisé en ce que** les ouvertures latérales (35, 36, 37) sont situées en étant décalées latéralement les unes par rapport aux autres.

4. Système de commutateur de protection selon au moins une des revendications précédentes, **caractérisé en ce qu'**un dispositif de verrouillage (52, 53, 53a, 53b) commandé par le mouvement de pivotement du module de raccordement (3) est prévu entre la partie supérieure de commutateur (1) et la partie inférieure de commutateur (2).

5. Système de commutateur de protection selon au moins une des revendications précédentes, **caractérisé en ce que** les contacts à fiches (17, 18, 19) de la partie supérieure de commutateur (1) font saillie vers le bas sur la face inférieure de celle-ci et sont entourés au moins latéralement par des languettes de guidage ou de protection (20, 21, 22, 23, 24, 25).

6. Système de commutateur de protection selon au moins une des revendications précédentes, **caractérisé en ce que** le module de raccordement (3) présente au moins un dispositif de verrouillage ou d'encliquetage (45 ; 52, 53) pouvant venir en prise de verrouillage avec la partie supérieure de commutateur (1) ou la partie inférieure de commutateur (2).

7. Système de commutateur de protection selon au moins une des revendications précédentes, **caractérisé en ce que** le boîtier (1a) de la partie supérieure de commutateur (1) présente toujours des ouvertures ou des fentes latérales (60, 61, 62) permettant le logement de lames de contact (64, 65).

8. Système de commutateur de protection selon au moins une des revendications précédentes, **caractérisé en ce que** les contacts à fiches (17, 18, 19) de la partie supérieure de commutateur (1) sont disposés de façon à pouvoir être enlevés.

9. Système de commutateur de protection selon la revendication 8, **caractérisé en ce que** les dimensions des contacts à fiches (17, 18, 19) s'adaptent aux ouvertures (60, 61, 62) sur le côté du boîtier (1a) de la partie supérieure de commutateur (1) et aux contacts complémentaires prévus à cet endroit.

10. Système de commutateur de protection selon au moins une des revendications précédentes, **caractérisé en ce que** le module de raccordement (3) est relié de façon articulée à la partie inférieure de commutateur (2).

11. Système de commutateur de protection selon la revendication 10, **caractérisé en ce qu'**un second dispositif de verrouillage (52, 53) est prévu.

12. Système de commutateur de protection selon la revendication 11, **caractérisé en ce que** le second dispositif de verrouillage est accouplé à un levier réglable (52), lequel commande un levier de verrouillage (53) disposé sur le côté de la partie inférieure de commutateur (2) qui est opposé au module de raccordement (3), ce levier pouvant venir en prise de verrouillage avec la partie inférieure de commutateur (2).

13. Système de commutateur de protection selon la revendication 12, **caractérisé en ce que** le levier (52) est accouplé mécaniquement au module de raccordement (3).

14. Système de commutateur de protection selon au moins une des revendications précédentes, **caractérisé en ce que** chaque partie inférieure de commutateur (2) présente des pattes d'enclenchement (13, 14, 15) destinées à venir en prise sous les barres omnibus de courant (15a, 15b, 15c), et éventuellement un dispositif de blocage ou de serrage (16).

15. Système de commutateur de protection selon au moins une des revendications précédentes, **caractérisé en ce qu'**au moins deux unités de système de commutateur de protection sont juxtaposées sur des barres omnibus de courant (9, 10, 11) et sont reliées électriquement entre elles latéralement par des lames de contact (64, 65).

16. Système de commutateur de protection selon au moins une des revendications précédentes, **caractérisé en ce que** chaque module de raccordement (3) présente des bornes à ressort (34) permettant le raccordement de lignes de départ (42).

17. Système de commutateur de protection selon au moins une des revendications précédentes, **caractérisé en ce que** le système présente au moins un commutateur (71) et un contacteur (70) qui sont disposés parallèlement l'un à l'autre sur les barres omnibus (9, 10, 11), le commutateur (71) et le contacteur (70) étant reliés électriquement par des contacts auxiliaires (64, 65) situés entre ces derniers.

18. Système de commutateur de protection selon la revendication 17, **caractérisé en ce qu'**il est prévu au moins un commutateur (71), un contacteur (70) et un contacteur d'inversion (73) dont la liaison électrique est assurée par des éléments de contact (64, 65) qui sont insérés dans les ouvertures latérales (60, 61, 62) entre ces derniers.

19. Système de commutateur de protection selon au moins une des revendications précédentes, **caractérisé en ce qu'**une combinaison constituée d'un commutateur de protection (71), d'un contacteur (70) et/ou d'un contacteur d'inversion (73) est prévue sous la forme d'au moins un montage en série partiel.

20. Système de commutateur de protection selon au moins une des revendications précédentes, **caractérisé en ce que** les contacts à fiches (17, 18, 19) de la partie supérieure de commutateur (1) sont entourés par des rebords de protection (20a, 22a, 24a).

21. Système de commutateur de protection selon au moins une des revendications précédentes, **caractérisé en ce que** la partie inférieure de commutateur (2) présente, pour les contacts ou lames de contact (5, 6, 7) disposés dans la partie inférieure de commutateur (2), des compartiments de protection formés par des sections de boîtier (12a, 13a, 14a), de façon à ce que ces contacts (5, 6, 7) soient logés dans la partie inférieure de commutateur (2) en étant protégés contre les contacts accidentels.

22. Système de commutateur de protection selon au moins une des revendications précédentes, **caractérisé en ce que** le module de raccordement (3) présente des parois latérales (3a) qui recouvrent latéralement les lames de contact (38, 39, 40) prévues dans le module de raccordement (3) et éventuellement s'étendent au-delà des lames de contact.

23. Système de commutateur de protection selon la revendication 22, **caractérisé en ce que** les parois latérales (3a) et la surface supérieure (3b) présentant l'ouverture (47) encadrent au moins partiellement une pièce de raccordement de boîtier (1c) de la partie supérieure de commutateur (1) en état de service.

24. Système de commutateur de protection selon au moins une des revendications précédentes, **caractérisé en ce que** la partie supérieure de commutateur (1) présente sur sa face inférieure un dispositif de blocage (92, 96, 97, 98) amovible affecté à chaque contact (17, 18, 19).

25. Système de commutateur de protection selon la revendication 24, **caractérisé en ce qu'**un support (93, 98) est affecté à chaque contact (17, 18, 19).

26. Système de commutateur de protection selon la revendication 24 ou 25, **caractérisé en ce que** chaque contact (17, 18,19) est doté de butées (91, 92).
